# EUROPEAN PATENT APPLICATION

(11) **EP 2 465 795 A1**
(43) Date of publication of application: **20.06.2012**
(21) Application number: 11193911.2
(22) Date of filing: 16.12.2011
(51) Int. Cl.: B65G 1/04

(54) **Warehouse for the storage of elongated wooden pieces and work centre comprising said warehouse**

(30) Priority: 17.12.2010 IT PD20100382
(71) Applicant: Working Process S.R.L., 29020 Settima di Gossolengo, Piacenza (IT)
(72) Inventor: Schiavetta, Massimo, I-29020 Settima di Gossolengo, PIACENZA (IT)
(74) Representative: Mitola, Marco

(57) **Abstract**

A warehouse (4) for the storage of wooden pieces (8), comprising a storage area (12) of the pieces (8), a bridge structure (16) which at least partially surrounds said storage area (12) and which supports gripping devices (20) of the pieces (8). Advantageously, the storage area (12) comprises separator means (24) which identify storage aisles (28) of the pieces (8), positioned parallel to at least a first storage direction (X-X). The pieces (8) are aligned parallel to said at least one first storage direction (X-X) and are piled directly one on top of the other in a vertical direction (Z-Z) so as to touch. The gripping devices (20) comprise at least one carriage (42) which supports at least one gripping head (44) which inserts itself in said storage aisles (28) and picks up the pieces (8) from above in the vertical direction (Z-Z).

## Description

The present invention relates to a warehouse for the storage of elongated wooden pieces, and a relative work centre comprising said warehouse.

In particular, in work centres for processing elongated wooden pieces, for example for making doors or windows or parts of doors or windows, it is known of to use storage warehouses of untreated pieces to be processed or o semi-finished pieces.

In fact the wooden pieces, which in an untreated configuration are the shape of elongated squares must be subjected to varied mechanical machining, such as for example, tenoning, drilling, milling and profiling operations so as to be subsequently assembled and form the frames of the wooden doors and windows.

The work centres comprise various workstations, such as for example tenoning, drilling, milling and profiling stations which perform the various processing operations on the piece. To save on machine time it is known of to use a piece warehouse, of untreated or semi-finished pieces, inside the work centre to temporarily store the pieces, untreated or semi-finished, between one processing operation and another.

This way it is possible for example to temporarily park the untreated or semi-finished pieces while the various stations finish performing processing on other pieces, without having to continually interrupt processing and pick up the pieces several times.

The use of the piece warehouse is particularly advantageous moreover in work centres where mechanical processing of pieces having different dimensions or lengths is performed.

The warehouses of the known art do not permit an optimisation of space, storage times or subsequent picking up of the pieces.

In fact in the known warehouses the pieces, untreated or semi-finished, are positioned on special racks by relative gripping clamps. The clamps with relative racks occupy a considerable amount of space: in other words the dimensions of the clamps and of the racks, as well as the space needed to move the clamps between the racks to place and pick up the pieces and therefore not utilisable, considerably reduce the useful storage space.

Moreover, the warehouses of the prior art do not envisage the cataloguing and positioning of the pieces according to their effective length, so as to optimise the available space in the warehouse to the best.

The purpose of the present invention is to make a warehouse which overcomes the drawbacks mentioned with reference to the prior art.

Such drawbacks and limitations are resolved by a warehouse according to claim 1.

Other embodiments of the warehouse according to the invention are described in the subsequent claims.

Further characteristics and advantages of the present invention will be more clearly comprehensible from the description given below of its preferred and non-limiting embodiments, wherein:

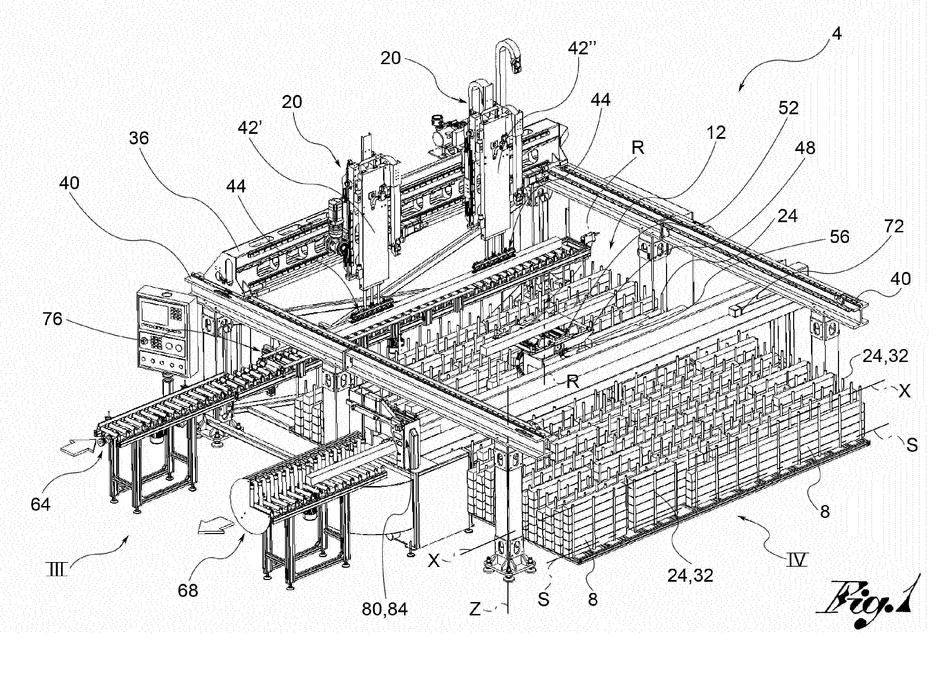

figure 1 shows a perspective view of a warehouse according to one embodiment of the present invention;

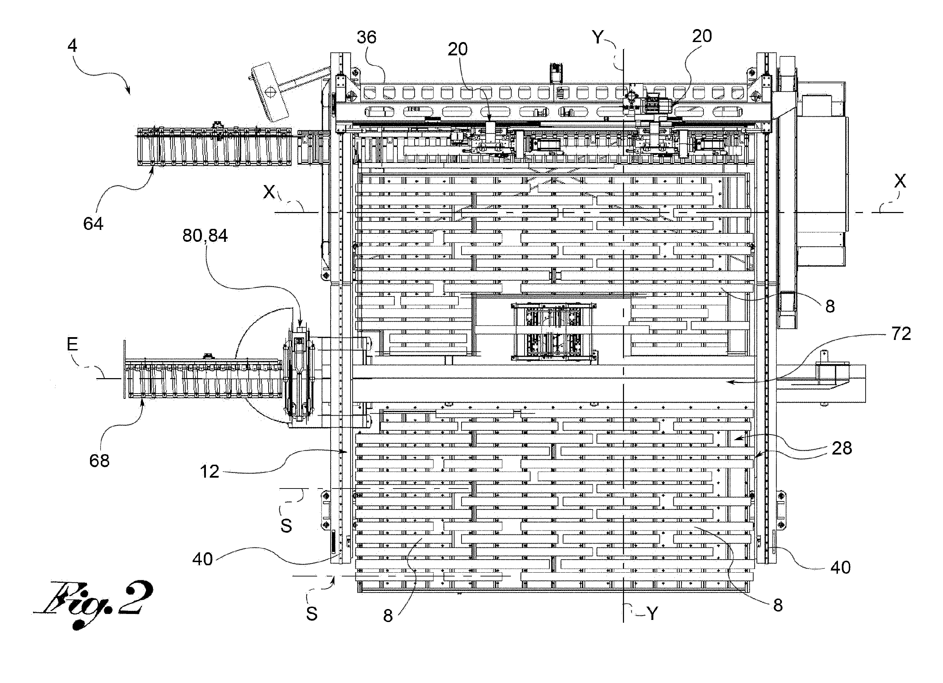

figure 2 shows a ground view of the warehouse in figure 1;

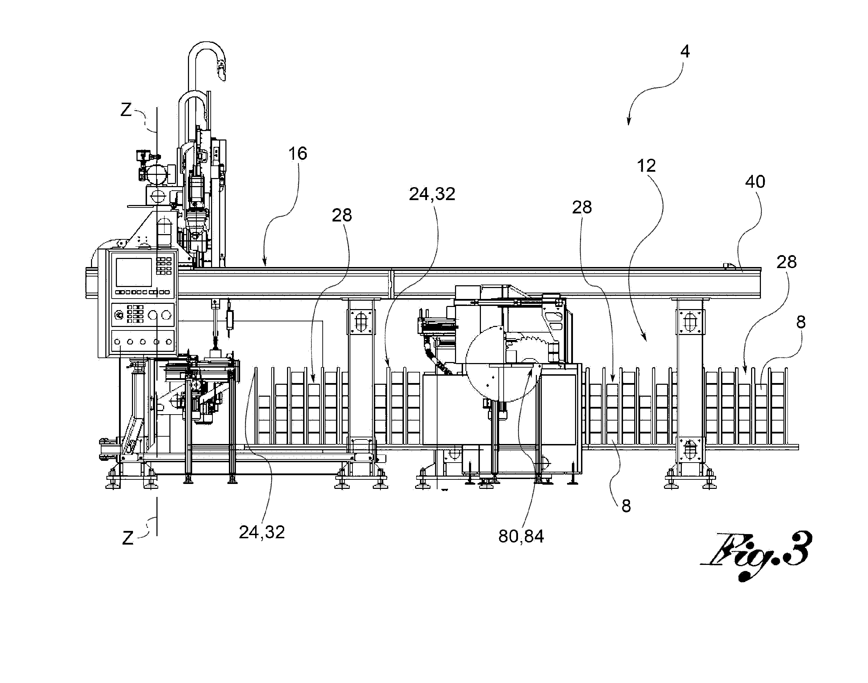

figure 3 shows a side view of the warehouse in figure 1, from the side of the arrow III in figure 1;

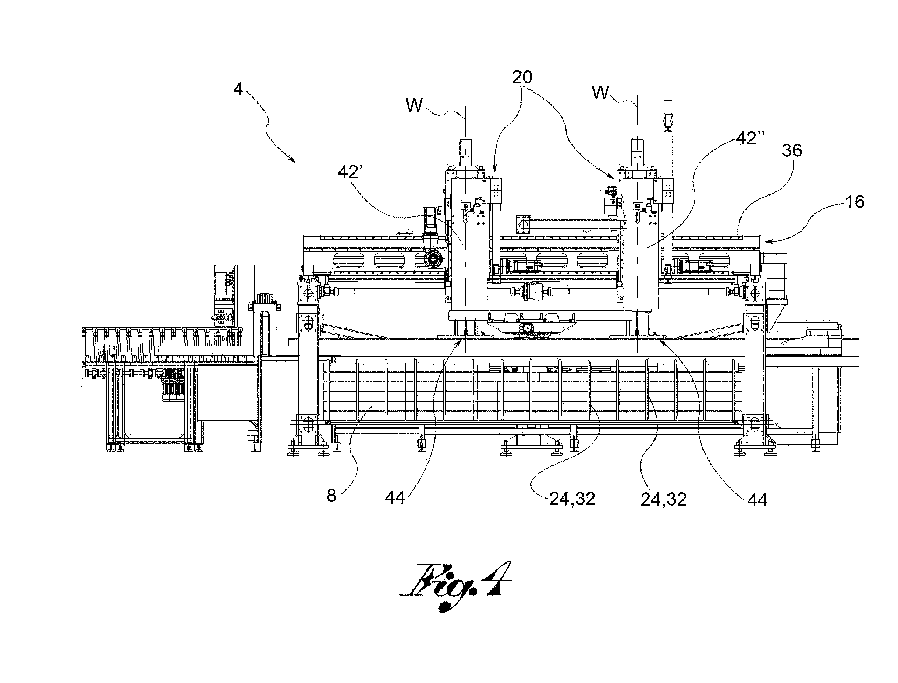

figure 4 shows a side view of the warehouse in figure 1, from the side of the arrow IV in figure 1;

figure 5 shows a ground view of a warehouse according to a further embodiment of the present invention.

The elements or parts of elements common to the embodiments described below will be indicated using the same reference numerals.

With reference to the aforesaid figures, reference numeral 4 globally denotes a warehouse for the storage of elongated pieces 8, preferably wooden, having preferably a main extension S-S.

The use of the warehouse 4 for the storage of elongated wooden pieces having a main extension S-S is preferable but should not be considered in a restrictive manner. In other words pieces not in wood and having different shapes, such as for example squat, not necessarily elongated forms, may be stored.

Said warehouse 4 is preferably inserted in the layout of a work centre for processing wooden pieces 8. The work centre, not shown, comprises a plurality of workstations for performing on the untreated or semi-finished pieces 8, the mechanical processing of tenoning, drilling, milling and profiling operations so as to be subsequently assembled and form the frames of wooden doors and windows.

The warehouse 4 of the present invention therefore has the purpose of housing, at least temporarily, the pieces 8 which need to be fed to the work stations so as to be processed and subsequently parked.

The warehouse 4 comprises a storage area 12 of the elongated pieces 8 which houses said elongated pieces 8 and a bridge structure 16 which at least partially surrounds said storage area 12 of the pieces 8.

The bridge structure 16 supports gripping devices 20 of the pieces 8 placed in the storage area 12.

Advantageously, the storage area 12 comprises separator means 24 which identify storage aisles 28 of the pieces 8, said storage aisles 28 being positioned parallel to at least a first storage direction X-X.

The pieces 8 are aligned parallel to said at least one first storage direction X-X and are piled directly one on top of the other in a vertical direction Z-Z, the pieces 8 being housed with clearance within said storage aisles 28.

In particular, the pieces are housed with clearance in the storage aisles 28 to facilitate their insertion but also their gripping from above. Such clearance is limited so as to facilitate the insertion and extraction of the pieces 8 and to prevent the piled pieces from tumbling down. In other words the clearance is limited so as to prevent the maximum overhang excursion between adjacent pieces 8 from permitting the accidental falling of the same, for example as a result of accidental impact or even as a result of vibrations transmitted from the warehouse.

The pieces are piled directly on top of one another: in other words there are no pallets, supports, platforms or similar means placed between adjacent pieces. The pieces 8 are simply placed one on top of another in direct contact.

The storage aisle 28 may also be directed for example along a second storage direction Y-Y, for example perpendicular to said first storage direction X-X. For example, pieces 8 positioned in a chequer board pattern in a first and a second storage direction X-X, Y-Y, perpendicular to each other may be stored in a storage area 12.

The separator means 24 which identify the storage aisles 28 of the pieces comprise partitions and/or columns 32 which delimit in a continuous and/or discontinuous manner said storage aisles 28.

The partitions may delimit the storage aisles in a substantial continuous manner, and the columns 32 may delimit such storage aisles in a discreet or discontinuous manner. In any case, such separator means 28 ensure that the pieces 8 remain inside the storage aisles 28 until they are picked up by the gripping devices 20.

The storage aisles 28 are delimited perpendicular to the respective storage directions X-X, Y-Y so as to prevent the pieces from moving transversally in relation to the respective storage directions X-X, Y-Y. The storage aisles 28 are open from the top, along the vertical direction Z-Z, to allow the insertion of the gripping devices 20, as well as the laying down and picking up of the pieces.

The gripping devices 20 are supported by said bridge structure 16 in such a way as to move along at least one support beam 36 positioned above the storage area 12, said support beam 36 being positioned and moving, along a controlled axis, perpendicular to the first storage direction X-X, along a second storage direction Y-Y. The direction of the support beam 36 can even be inverted positioning it perpendicular to the second storage direction Y-Y, so as to translate parallel to the first storage direction X-X.

Preferably, said support beam 36 is supported by a pair of longitudinal frame members 40 directed, for example, along the second storage direction Y-Y perpendicular to said first storage direction X-X.

The bridge structure 16 is preferably mechanically separate from the storage area 12 of the pieces 8 so as not to directly receive the vibrations induced by the movement of said gripping devices 20 of the pieces 8.

The gripping devices are supported by the support beam 36 according to at least two controlled axes, respectively directed along one of said first or second storage directions X-X, Y-Y and along the vertical direction Z-Z.

The gripping devices 20 comprise carriages 42 which support gripping heads 44 which insert themselves at least partially in said storage aisles 28 and pick up the pieces 8 from above in the vertical direction Z-Z.

According to one embodiment, the gripping devices 44 comprise suckers or suction devices suitable for hooking, raising and transporting the pieces 8 within the warehouse 4.

This way it is possible to position the gripping devices 20, and in particular the carriages 42, at the piece 8 to be picked up, lower the gripping head 44 from above so as to touch an upper side of the piece 8 to be picked up, operate the suckers or suction devices so as to firmly hook the piece 8 and then raise the piece 8.

According to a possible embodiment, the gripping heads 44 of the gripping devices 20 are supported so as to swivel in relation to a gripping axis W-W parallel to said vertical direction Z-Z and to position themselves parallel to the first and/or second storage direction (X-X, Y-Y), so as to enable insertion from above in the storage aisles 28 directed along the first and/or second storage direction (X-X, Y-Y) respectively.

According to a possible embodiment, the gripping devices 20 comprise two or more carriages 42 aligned along the same support beam 36 so as to permit the safe grasping of pieces 8 having an elevated extension and mass. Preferably, said carriages 42' , 42" can be moved along the support beam 36 in an independent manner from each other so as to be adapted for grasping pieces 8 of different lengths.

According to one embodiment, the warehouse 4 comprises a rotation device 48 of the pieces 8 comprising a support plane 52 suitable for receiving the pieces 8 from the gripping devices 20 and comprising rotation means 56 able to rotate the support plane 52 in relation to a rotation axis R-R parallel to said vertical direction Z-Z, so as to rotate the piece 8 between the first and second storage direction X-X, Y-Y and/or to tip the piece 8 by 180°, in the same storage direction, to enable the tipped up piece 8 to be picked up again by the gripping devices 20.

In fact the tipping of the piece 8 may be functional to the feeding of said piece 8 to subsequent gripping devices and/or processing stations.

According to one embodiment, the warehouse 4 comprises an entrance conveyor belt 64 which conveys the pieces introduced towards the gripping devices 20.

For example, said entrance conveyor belt 64 comprises a plurality of rollers which rotate idle so as to accompany the entrance of the pieces 8 towards the parking area 12 before these are picked up by the gripping devices 20.

According to one embodiment, the warehouse 4 comprises an exit conveyor belt 68 of the pieces 8, suitable for receiving the pieces 8 from the gripping devices 20 and conveying them outside the warehouse 4.

Said exit conveyor belt 68 comprises for example a plurality of rollers mounted idle on relative pins so as to facilitate the expulsion of the pieces.

According to one embodiment, said exit conveyor belt 68 comprises thrust means 72 suitable to push the pieces 8 towards the exit of the warehouse. For example, the thrust means comprise a piston or similar devices suitable for pushing the pieces towards the exit conveyor belt 68.

According to one embodiment, the warehouse 4 comprises measurement devices 76 of the pieces 8 suitable for measuring the dimensions of the pieces 8, such as for example the length of the pieces 8 in relation to the main extension S-S, during the phase of introducing the pieces 8 to the storage area 12 and before storage of the same .

For example, the measurement devices 76 of the pieces 8 are positioned at said entrance conveyor belt 64 of the pieces 8. For example, the measurement devices 76 are optical readers which measure the length of the pieces 8 during their translation along the entrance conveyor belt 64.

Preferably, the warehouse 4 comprises a data processor unit which acquires the data relative to the number and dimensions of the incoming pieces 8. In addition said data processor unit memorises the data on the position and orientation of the pieces 8 inside the storage aisles 28 which they are placed in and controls the movements of the gripping devices 20.

Preferably, the warehouse 4 comprises cutting means 80 of the pieces 8 suitable for cutting the pieces 8 to size during the phase of picking up and expelling the same from the warehouse 4.

For example, said cutting means 80 comprise a cutting-off machine 84 provided with optical readers of the piece 8 so as to cut the piece to the required size.

Preferably, said cutting means 80 are synchronised, by means of said data processor unit, with the thrust means 72 suitable for pushing the piece 8 in a controlled manner to perform cutting of the piece 8 to a predefined size.

Preferably, the cutting devices 80 are positioned at the exit conveyor belt 68, so as to cut the piece 8 during the final phase of expulsion from the warehouse 4.

According to one embodiment, the exit conveyor belt 68 is mounted so as to rotate around an expulsion axis E-E, for example parallel to one of said storage directions X-X, Y-Y, so as to enable the rotation of the piece 8 during expulsion from the warehouse 4 by an angle of at least 90 degrees.

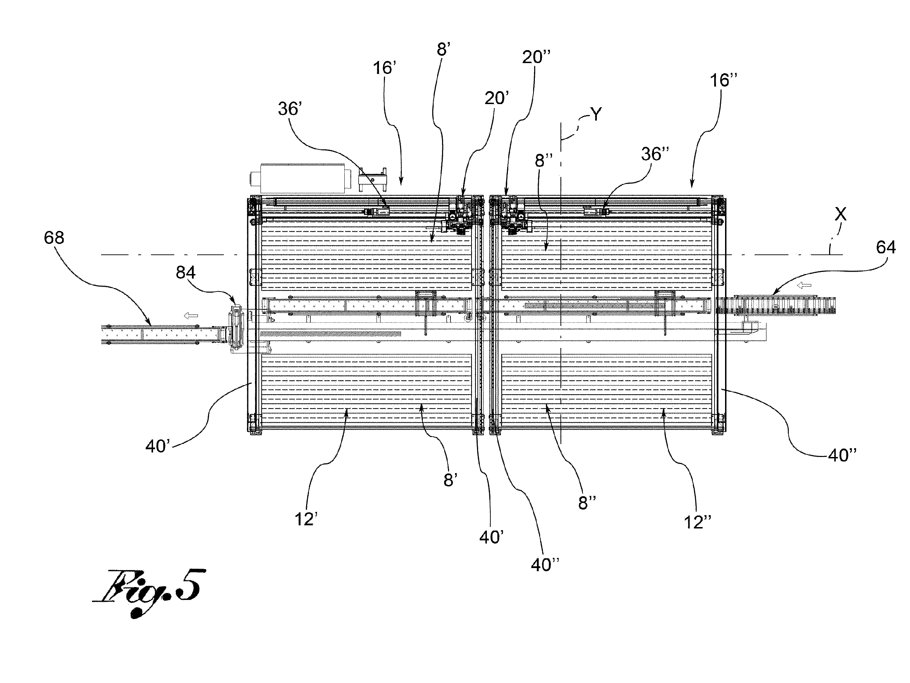

According to a further embodiment of the present invention, shown for example in figure 5, the warehouse is of the double type. In other words, the warehouse 4 comprises two separate, and preferably adjoining storage areas 12',12" of the pieces 8 suitable for working contemporaneously one for the filling or storage phase of the pieces 8'and the other for the picking up or emptying phase of the pieces 8" to be sent for subsequent processing steps.

Obviously the filling and emptying function between the storage areas may be inverted as needed so as to make for the maximum flexibility of the warehouse in relation to the requirements of the work centre to which the warehouse is functionally connected.

This arrangement has the advantage of permitting the contemporary performance of storage and pick up of the pieces without creating warehouse down times.

Two bridge structures are therefore preferably envisaged 16', 16" which surround the respective storage areas 12',12". Each bridge structure 16', 16" supporting relative gripping devices 20',20" operable independently of each other. The bridge structures 16', 16" provide respective support beams 36', 36" supported by pairs of longitudinal frame members 40′, 40" directed along the second storage direction Y-Y perpendicular to the first storage direction X-X. The support beams 36', 36" are therefore moved, along a controlled axis, perpendicular to the first storage direction X-X, along a second storage direction Y-Y.

The two storage areas 12', 12" may be aligned in relation to the first storage direction X-X; preferably, in such configuration, the entrance conveyor belt 64 and the exit conveyor belt 68 are in turn aligned along said first storage direction X-X so as to position themselves at opposite lateral ends of the warehouse.

As may be appreciated from the description, the warehouse according to the invention makes it possible to overcome the drawbacks of the prior art presented.

In particular the untreated or semi-finished piece are all "photographed", that is to say measured and catalogued according to their effective size at the moment of entering the warehouse, so as to be positioned in the warehouse in such a way as to optimise and make the most of the space effectively available.

This way the order of introducing the pieces into the warehouse may be entirely random: the warehouse is therefore able to adapt to the functioning of the work centre in real time.

In the solutions of the prior art rather, the work centre often has to adapt to the limitations imposed by the warehouse and the processing of the pieces is thereby slowed down; in other words, in the solutions of the prior art, the work centre adapts in terms of mechanical processing to the limitations of the warehouse, thus de facto slowing down the mechanical processing phases on the pieces.

The warehouse according to the present invention rather is able to adapt to the functioning of the work centre without in any way influencing the mechanical processing performed on the pieces; in other words, the warehouse adapts to the functioning of the work centre without influencing the processing times of the centre.

Moreover, the vertical piling of the elongated pieces ensures a marked and optimal exploitation of the available space. In fact, the pieces are piled on top of each other without any interposition of braces, supports or partitions which would contribute to occupying space not utilisable for the pieces.

Moreover the picking up of the pieces from above using suction means, makes it possible to avoid setting aside manoeuvring areas for adjacent gripping heads or clamps, that is lateral to the racks housing the pieces, as occurs in the warehouses of the prior art.

In addition, the scanning means of the incoming pieces to the warehouse makes it possible to measure, and therefore correctly position the pieces in the vacant area of the warehouse, without the use of devices such as barcodes, chips or RFID type labels which add to the costs and complexity of the warehouse, especially if one considers that a warehouse of this type may contain many hundreds of pieces.

In addition the warehouse envisages the use of devices for cutting to size the pieces coming out of the warehouse. Such cutting devices, such as cutting-off machines, make it possible to obtain pieces of the desired dimensions for the subsequent phases of assembly or processing.

This way the functioning of the work centre is optimised even further thanks to a flexible management of the pieces warehouse. In fact pieces of any size and length may be stored without having to worry beforehand about the subsequent processing which such pieces are destined to undergo. Then, as needed, a piece is picked up and cut to size depending on the processing required at such time by the work centre. The cutting to size of the piece leaving the warehouse is certainly simpler and cheaper than cutting the piece to size in the work centre where the processing heads and gripping devices are optimised exclusively for shaping processing on the piece such as tenoning, drilling, milling and profiling operations.

Moreover, the increased flexibility of the warehouse according to the present invention is also due to the presence of a rotating loading belt; in fact such rotation provides an opportunity to grasp the piece with an optimal orientation for the machine or operating head to which the outgoing piece must be fed. The opportunity to grasp the piece from an optimal orientation, for example blocking the piece to a pair of bases as opposed to the relative lateral rims, makes it possible to grasp the piece in such a way as to optimise, that is speed up the subsequent phases of tenoning, drilling, milling and profiling.

In fact, the gripping surfaces of the piece cannot usually be processed by the operating heads and to be processed the piece needs to be released and subsequently picked up again. Such operations, as well as slowing down the processing phases of the work centre, introduce inevitable imprecision and thereby reduce the working tolerances which can be achieved by the work centre.

A person skilled in the art may make numerous modifications and variations to the warehouses described above so as to satisfy contingent and specific requirements, all contained within the sphere of protection of the invention as defined by the appended claims.

## Claims

1. Warehouse (4) for the storage of pieces (8) in wood, having a main extension (S-S), comprising
- a storage area (12) of the pieces (8) which houses said pieces (8),
- a bridge structure (16) which at least partially surrounds said storage area (12) of the pieces (8), the bridge structure (16) supporting gripping devices (20) of the pieces (8) placed in the storage area (12), **characterised by** the fact that
- the storage area (12) comprising separator means (24) which identify storage aisles (28) of the pieces (8), said storage aisles (28) being positioned parallel to at least a first storage direction (X-X),
- the pieces (8) being aligned parallel to said at least one first storage direction (X-X) and being piled directly one on top of the other in a vertical direction (Z-Z), the pieces (8)being housed with clearance within said storage aisles (28),
- the gripping devices (20) comprise at least one carriage (42) which supports at least one gripping head (44) which inserts itself at least partially in said storage aisles (28) and picks up the pieces (8) from above in the vertical direction (Z-Z),
wherein the gripping heads (44) of the gripping devices (20) are supported so as to swivel in relation to a gripping axis (W-W) parallel to said vertical direction (Z-Z) and to position themselves parallel to the first and/or second storage direction (X-X, Y-Y), so as to enable insertion from above in the storage aisles (28) directed along the first and/or second storage direction (X-X, Y-Y) respectively.

2. Warehouse (4) according to claim 1, wherein the gripping devices (20) comprise suckers or suction devices able to hook, raise and transport the pieces (8) within the warehouse (4).

3. Warehouse (4) according to claim 1 or 2, wherein the gripping devices (20) are supported by said bridge structure (16) so as to move along at least one support beam (36) positioned above the storage area (12), said support beam (36) being positioned and moving, along a controlled axis, perpendicular to the first storage direction (X-X), along a second storage direction (Y-Y).

4. Warehouse (4) according to claim 3, wherein said support beam (36) is supported by a pair of longitudinal frame members (40) directed along the second storage direction (Y-Y) perpendicular to said first storage direction (X-X).

5. Warehouse (4) according to any of the previous claims, wherein the bridge structure (16) is mechanically separate from the storage area (12) of the pieces(8) so as not to receive the vibrations induced by the movement of said gripping devices (20) of the pieces (8) directly.

6. Warehouse (4) according to claim 3,4 or 5, wherein the gripping devices (20) are supported by the support beam (36) according to at least two controlled axes, respectively directed along one of said first or second storage directions (X-X, Y-Y) and along a vertical direction (Z-Z).

7. Warehouse (4) according to any of the previous claims, wherein the separator means (24) which identify the storage aisles (28) of the pieces (8) comprise partitions and/or columns (32) which delimit in a continuous and/or discontinuous manner said aisles (28), the storage aisles (28) being delimited perpendicularly in relation to the respective storage directions (X-X,Y-Y) and being open from above , along the vertical direction (Z-Z), to allow the insertion of the gripping devices (20), as well as the laying down and picking up of the pieces.

8. Warehouse (4) according to any of the previous claims, comprising a rotation device (48) of the pieces (8) comprising a support plane (52) suitable to receive the pieces (8) form the gripping devices (20) and comprising rotation devices (56) able to rotate the support plane (52) in relation to a rotation axis (R-R) parallel to said vertical direction (Z-Z), so as to rotate the piece (8) between the first and second storage direction (X-X, Y-Y) and/or to tip the piece (8) by 180°, in the same storage direction (X-X, Y-Y), to enable the tipped up piece (8) to be picked up again by the gripping devices (20).

9. Warehouse (4) according to any of the previous claims, comprising measurement devices (76) of the pieces (8) able to measure the dimensions of the pieces (8), such as at least the length of the pieces (8) in relation to the main extension (S-S), during the phase of introducing the pieces (8) to the storage area (12) and before storage of the same.

10. Warehouse (4) according to any of the previous claims, comprising an exit conveyor belt (68) of the pieces (8), suitable to receive the pieces (8) from the gripping devices (20) and to convey them out of the warehouse (4), said exit conveyor belt (68) comprising thrust devices (72) suitable to push the pieces (8) towards the exit of the warehouse (4).

11. Warehouse (4) according to any of the previous claims, wherein the exit conveyor belt (68) is mounted so as to rotate around an expulsion axis (E-E), substantially parallel to one of said storage directions (X-X, Y-Y), so as to enable the rotation of the piece (8) during expulsion from the warehouse (4) by an angle of at least 90 degrees.

12. Warehouse (4) according to any of the previous claims, comprising cutting devices (80) of the pieces (8) able to cut the pieces (8) to size during the phase of picking up and expelling the piece (8) from the warehouse (4).

13. Warehouse (4) according to claim 12, wherein said cutting devices (80) comprise a cutting-off machine (84) provided with optical readers of the piece (8) and thrust devices (72) suitable to push the piece (8) in a controlled manner to perform the cut to a predefined size.

14. Warehouse (4) according to claim 12 or 13, wherein said cutting devices (80) are positioned at the exit conveyor belt (68), so as to cut the piece (8) during the final phase of expulsion from the warehouse (4).

15. Warehouse (4) according to any of the previous claims, wherein the warehouse (4) comprises two separate storage areas (12',12") of the pieces (8) suitable for working contemporaneously one for the filling or storage phase of the pieces (8') and the other for the picking up or emptying phase of the pieces (8"), to be sent to subsequent processing phases, wherein two bridge structures are envisaged (16', 16") which surround the respective storage areas (12',12"), each bridge structure (16', 16") supporting relative gripping devices (20',20") operable independently of each other so as to be able to act contemporaneously and independently on the various storage areas.
